# EUROPEAN PATENT APPLICATION

(11) **EP 3 156 177 A1**
(43) Date of publication of application: **19.04.2017**
(21) Application number: 15810430.7
(22) Date of filing: 15.06.2015
(51) Int. Cl.: B24D 3/00, B24D 3/06, B24D 3/08

(54) **DIAMOND-CONTAINING BRAZING MATERIAL AND DIAMOND-BONDED TOOLS UTILIZING SAME**

(30) Priority: 16.06.2014 JP 2014123631
(71) Applicant: Ogura, Yoshigoro, Tokyo 143-0016 (JP); OGURA, Michko, Ota-ku Tokyo 1430016 (JP); KOJIMA, Terumi, Ota-ku Tokyo 1430016 (JP); OGURA, Yoshihisa, Ota-ku Tokyo 1430022 (JP); MATSUMOTO, Miwa, Yokohama-shi Kanagawa 2250024 (JP)
(72) Inventor: OGURA, Yoshigoro, Ota-ku, Tokyo 143-0016 (JP)
(74) Representative: Cabinet Plasseraud
(86) International application number: PCT/JP2015/067220
(87) International publication number: WO 2015/194516

(57) **Abstract**

[Problem] To provide a diamond-containing brazing material that is used for easier bonding of diamond surfaces to a tool or the like upon having coated the diamond surfaces with a non-peeling metal and a diamond-bonded tool or the like that utilizes the brazing material.

[Solution] In order to solve the problem, the present invention provides: a diamond-containing brazing material characterized in that non-peeling metal-coated diamonds, the surfaces of which have been coated with a metal in a non-peeling manner, are mixed in a brazing material; a diamond-containing brazing material characterized in that the diamond-containing brazing material is formed into a drop-like or rod-like shape; and a diamond-bonded tool or the like characterized in that upon having formed the diamond-containing brazing material into a tool shape, the brazing material is fused so as to be metal-bonded to a surface of the tool.

## Description

### [Technical Field]

The present invention relates to a diamond-joined tool in which a diamond surface is coated with non-peelable metal coating and is joined to a tool. More specifically, the present invention relates to a diamond-containing brazing material in which non-peelable metal-coated diamond is mixed and to a diamond-joined tool in which the material is melted and metallically bonded (joined) thereto.

### [Background Art]

Use of diamond is not limited to only in decorative materials but is being diffused to industrial applications. There is a large demand for diamond in fields from component machining of ultra-precise industrial products to tools for construction works such as a road cutter.

However, diamond has worldwide recognition that its perfect joining with metal is impossible. Thus, it has been impossible to reduce a size of a raw stone to be used and to use it in a soldered form. In fabrication of a tool, it has been necessary to employ crimping or a structurally enlarged pressing method with the purpose of fixation.

Moreover, regarding abrasive grains, though it is called fixed abrasive grain type, perfect bonding is not formed in the fixed metal matrix or organic synthetic adhesive matrix and thus, a gripping force is lowered by an impact during machining as a tool and is removed or discarded in the middle of the work, which results in degradation of work capacity, and main usage has been non-economical.

As described above, conventionally, diamond has been evaluated to be chemically inert. Moreover, diamond does not react with any metal, and diamond is easily removed in a metal matrix by an impact of work in the middle of the usage.

Therefore, in a tool to which diamond is joined, technical development which enables sufficient use strength and long durable time regardless of its size has been in demand.

In response to such demand, the inventor has found non-peelable metal-coated diamond in a "method of coating metal on diamond surface non-peelably by chemical reaction" in Patent Literature 1. It was patented. Patent Literature 1 shows that chemical bonding (coexistence bonding) occurs by a chemical reaction (coexistence reaction) between diamond and metal and diamond has chemical activity.

In general, in the bonding between different kinds of elements, most of natures of the original elements are lost, and a counterpart of the reaction becomes totally different. For example, aluminum oxide (Al₂O₃) is generated by oxidation of aluminum, and aluminum has a low melting point for metal, that is, aluminum is melted at approximately 660°C and shows favorable conductivity. On the other hand, aluminum oxide in which oxygen is bonded to aluminum has a melting point leaping up to 2050°C and its conductivity is substantially equal to 0. As described above, a substance before a reaction and a reaction product between different kinds have totally different natures.

On the other hand, in the non-peelable metal-coated diamond by the technology in Patent Literature 1, a diamond portion maintains the nature of diamond while a metal coated portion still maintains the intrinsic nature of the metal at a bonded surface between the diamond and the metal coating as a boundary. And another metal can be soldered to the metal coated portion.

In order to measure coating strengths of diamond and coated metal of non-peelable metal-coated diamond in Patent Literature 1, a metal rod (φ 2 mm) was perpendicularly brazed to a diamond plane, and a tension test (5 examples) by a force of 25 kg or more was conducted. As a result, a soldered portion between the metal coating and the metal rod and a bonded surface between the diamond and the metal coating are both non-peelable, that is, they were not separated, but the diamond was gouged. All the tests of the five examples showed the same phenomenon. In the end, bonding strength between the diamond and the metal coating could not be measured.

Brazing is to join metals to each other, and metal cannot be brazed to diamond in a conventional concept.
On the other hand, regarding the non-peelable metal-coated diamond in Patent Literature 1, another metal can be brazed onto the metal coating on the surface, and by polishing the metal coating other than the brazed portion, transparency and hardness of diamond are exposed, which shows that the nature of diamond is maintained. With the technology in Patent Literature 1, it was considered that diamond and metal coating were firmly bonded without changing their natures.

In the non-peelable metal-coated diamond in Patent Literature 1, since the diamond and the metal coating are firmly bonded on the bonded surface without changing their respective natures, the reaction is called a coexistence reaction and the bonding generated by the reaction is called coexistence bonding.

The invention in Patent Literature 1 was conceived when Kaemon Ogura, the father of the inventor, who supplied phonograph needles, wanted to allow customers to purchase expensive diamond needles inexpensively by bonding diamond with a required size to a tip end of a metal rod. The invention was found and completed when the inventor embodied a diamond needle for reproduction of records in which diamond is bonded to the metal rod.

The non-peelable metal-coated diamond in Patent Literature 1 had a defect that soldering failed. Since the metal coating is firmly bonded to diamond, the defect was caused by a difference in expansion coefficients between diamond and brazed metal during cooling after heated soldering. It occurred more frequently as a single stone to be soldered became larger. Therefore, metal to be soldered needed to be selected from metal materials with expansion coefficients closer to that of diamond.

The invention in Patent Literature 1 has changed an idea of almost all the products to use diamond for industrial applications.

### [Citation List]

### [Patent Literature]

[Patent Literature 1] Japanese Patent No. 5127007

### [Summary of Invention]

### [Technical Problem]

However, Patent Literature 1 could not show a specific application example of the non-peelable metal-coated diamond. Moreover, it could not show a method of joining diamond to a tool more easily.

Thus, the present invention has an object to provide a specific method of application to a tool of the non-peelable metal-coated diamond obtained by the method of coating metal on the diamond surface non-peelably by a chemical reaction. More specifically, the present invention has an object to provide a diamond-containing brazing material for more easily joining to the tool after applying the non-peelable metal coating on the diamond surface and the diamond-joined tool using that.

### [Solution to Problem]

In order to solve the above-described problems, the present invention is;
[1] A diamond-containing brazing material characterized in that
   non-peelable metal-coated diamond in which metal is coated on a diamond surface non-peelably is mixed in a brazing material.
[2] The diamond-containing brazing material described in [1], characterized in that
   the diamond-containing brazing material is shaped to a drop shape or a rod shape.
[3] The diamond-containing brazing material described in [1], characterized in that
   the brazing material is a solder.
[4] The diamond-containing brazing material described in [1], characterized in that
   hard metal or abrasive grains indicating heat resistance against melting heat of the brazing material are mixed in the brazing material in order to improve dispersion performances of the non-peelable metal-coated diamond.
[5] A diamond-joined tool characterized in that
   a brazing material of the diamond-containing brazing material described in [1] is melted and metallically bonded on a tool surface.
[6] A diamond-joined tool characterized in that
   the diamond-containing brazing material described in [3] is deformed into a tool shape, and the brazing material is melted and metallically bonded to a tool surface.
[7] A diamond-joined sheet characterized in that
   the diamond-containing brazing material described in [1] is melted and pressurized on a carbon disk into a sheet shape.

For example, a method of manufacturing non-peelable metal-coated diamond in which diamond is coated with metal non-peelably is disclosed in Patent Literature 1 in detail.

Essential points of the invention in Patent Literature 1 are:
(1) a method of applying non-peelable metal coating to diamond in the air, including a first process of preparing diamond, a metal powder of either one of a mixed powder of a Cr metal powder and an oxide Cr powder or a single Cr metal powder, a collapse aid, and a heating device, a second process of mixing and sealing the metal powder, the collapse aid, and the diamond prepared in the first process in a container, a third process of heating the container prepared in the second process so as to cause a chemical reaction to occur between the metal powder and a diamond surface, a fourth process of taking the container heated in the third process out of the heating device and cooling it so as to cool a mixture of the diamond, the metal powder, and the collapse aid, and a fifth process of separating and recovering the metal-coated diamond from the cooled mixture, the method of coating metal on diamond surface non-peelably by a chemical reaction being characterized in that sintering is prevented by an action of the collapse aid, and collapsibility of the cooled mixture is promoted;
(2) a method of coating metal on diamond surface non-peelably by a chemical reaction described in (1), characterized in that the collapse aid does not react with the diamond even in a case of coexistence with the diamond at from 1150°C to 1160°C and does not inhibit a chemical reaction between the coexisting Cr metal powder and/or Cr oxide and the diamond;
(3) a method of coating metal on diamond surface non-peelably by a chemical reaction described in (2), characterized in that the collapse aid is one or two kinds or more selected from silicon carbide, silicon oxide, tungsten, tungsten carbide, chrome oxide, aluminum oxide, magnesium oxide, cubic boron nitride, and zirconium oxide;
(4) a method of coating metal on diamond surface non-peelably by a chemical reaction described in any one of (1) to (3), characterized in that the metal powder is a Cr metal powder, and the Cr metal powder and the collapse aid are mixed at a weight ratio of 1:1 to 1:5;
(5) a method of coating metal on diamond surface non-peelably by a chemical reaction described in any one of (1) to (4), characterized in that the diamond in the first process is diamond to which a metal coating inhibitor is applied at a spot not requiring non-peelable metal coating;
(6) a method of non-peelably coating diamond with metal described in (5), characterized in that the metal coating inhibitor is a metal coating inhibitor obtained by mixing a powder of the collapse aid to a solution with 30% of pure water and 70% of water glass; and
(7) a method of joining diamond and metal described in any one of (1) to (4), further including a sixth process of joining metal to the non-peelable metal coating portion of the diamond after the fifth process.

In addition, a non-peelable metal-coated diamond obtained by applying non-peelable metal coating to diamond may be manufactured by other methods. In the above, the method is performed in the air but it may be performed in a vacuum container, or hydrogen may be introduced into the vacuum container so as to have a hydrogen furnace. Moreover, a high-frequency electric furnace, a gas furnace or an electric furnace can be also used.

As a brazing material, various metal brazes according to a working temperature with less public pollution such as silver solder, for example, and solders classified to the working temperature not containing polluting metal such as lead metal are exemplified.

### [Advantageous Effects of Invention]

Since the present invention has the aforementioned constitution, the following effects are exerted. By mixing the non-peelable metal-coated diamond in which metal is coated on a diamond surface non-peelably with the brazing material, the non-peelable metal-coated diamond with which the brazing material is chemically bonded non-peelably can be easily joined to the tool through the brazing material by soldering the brazing material and the tool so that the diamond-joined tool can be provided. Moreover, by cutting and deforming a shape of the diamond-containing brazing material which is the present invention in accordance with a target to which the diamond is to be joined, it is only necessary that it is placed on the joining target portion, and the brazing material is heated/melted and soldered so that an appropriate amount of diamond can be joined to the tool more easily.

By only adding an appropriate amount of the non-peelable metal-coated diamond to a conventional component in a tool, the life and accuracy of a workpiece and a machining amount of the tool can be drastically improved, whereby drastic improvement of productivity and economy can be expected. Moreover, reduction of conventional diamond abrasive grains can be made possible.

That is, by using the non-peelable metal-coated diamond in which diamond and metal are firmly bonded non-peelably by a chemical reaction as a tool, removal and abrasion are reduced, durable hours of the tool are dramatically prolonged, and it is extremely economical.

### [Brief Description of Drawings]

[Figure 1] Figure 1 is an explanatory view of a method of fabricating a diamond-joined hand file to which a non-peelable metal-coated diamond is soldered.
[Figure 2] Figure 2 is an explanatory view of a method of fabricating a diamond-joined round grinding disk to which the non-peelable metal-coated diamond is soldered.
[Figure 3] Figure 3 is an explanatory view of a method of fabricating a diamond-joined rotating cutting disk to which the non-peelable metal-coated diamond is soldered.
[Figure 4] Figure 4 is an explanatory view of a method of fabricating a diamond-joined blade to which the non-peelable metal-coated diamond is soldered.
[Figure 5] Figure 5 is an explanatory view of a method of fabricating a diamond-joined disk-shaped blade to which the non-peelable metal-coated diamond is soldered.
[Figure 6] Figure 6 is an explanatory view of a method of fabricating a diamond-joined plate-shaped blade to which the non-peelable metal-coated diamond is soldered.
[Figure 7] Figure 7 is an explanatory view of a method of fabricating a diamond-joined band-shaped blade to which the non-peelable metal-coated diamond is soldered.
[Figure 8] Figure 8 is an explanatory view of a method of fabricating a diamond-joined polishing disk to which the non-peelable metal-coated diamond is soldered.
[Figure 9] Figure 9 is an explanatory view of a method of fabricating a diamond-joined tool tip end to which the non-peelable metal-coated diamond is soldered.
[Figure 10] Figure 10 is an explanatory view of a method of fabricating a diamond-joined sheet to which the non-peelable metal-coated diamond is soldered.

### [Description of Embodiment]

An embodiment of the present invention will be described below in detail by referring to the attached drawings. The present invention is not limited to the following example.

A diamond-containing brazing material is obtained by mixing non-peelable metal-coated diamond with a brazing material such as silver solder, solder or the like. A shape of the non-peelable metal-coated diamond-containing brazing material is flat spherical shape (drop) or a round rod or a square rod (rod = bar) considering ease of use as it is, and the shape is freely changed for use.

The non-peelable metal-coated diamond has such bonding performances that the brazed surface is not non-peelable and the diamond is broken in a measurement test of coating strength and thus, it can be mixed in the brazing material or a lead-less solder and applied to a surface of an arbitrary metal material of an iron plate with a required dimension and shape or a used file so to as make a machining tool, and a tool optimal for machining of a trial product can be made by a user.

### (A) When the non-peelable metal-coated diamond single grain is added to a drop or a bar:

Though an effect depends on a size of an abrasive grain, it is important to give consideration so that the abrasive grains are not packed too closely as a diamond particle becomes larger. Even diamond can be crushed by a force or a shock, and since a lower half of the abrasive grain is fixed to a base metal, an upper half becomes a plane, which looks as if a diamond plane is formed, and a machining speed of a workpiece lowers or machining becomes impossible.

The larger a mesh size is, the larger plane is formed in many cases. The file can be reproduced by washing the surface of the used file well and by brazing the non-peelable metal-coated diamond with an appropriate size to a hole after a shaved blade of the file which has been worn and lost. Moreover, a notch with a required dimension is provided on an outer circumference of a disk, and the notch of the disk is filled and brazed by using a drop, a bar, a chip or the like of the non-peelable metal-coated diamond with a required size so that it can be used as a cutting board.

As described above, by having the diamond abrasive grains contained in the brazing material or the solder and by flexibly deforming them to a preferred shape, the tool can be manufactured, which has been in demand for a long time by machining workers who are requested to meet required shapes and dimensions.

### (B) When an effect of a cutting blade of diamond is required by appropriately dispersing the non-peelable metal-coated diamond:

When the single grain of the non-peelable metal-coated diamond abrasive is mixed in the brazing material or solder, it is difficult to fix it to an application target material at a certain interval in many cases. In those cases, hard metal (metal such as tungsten, for example) which is not melted/mixed in a brazing material with a mesh equal to or slightly smaller than that of the diamond, solder or the like and other abrasive grains (materials having heat resistance such as SiC, Al₂O₃, GC and the like and a dispersing agent in which Cu, Ni, Ag and the like are electroless or electrolytic-plated on the surface thereof) are prepared and mixed so as to achieve a required surface dispersion value of diamond and to create a drop or a bar, and by applying it on a tool having an intended shape or a tool having an arbitrary shape, an optimal tool to which the non-peelable metal-coated diamond with favorable dispersion is joined can be fabricated by the user.

The round rod or a square rod in which the non-peelable metal-coated diamond is appropriately dispersed may be used as a file as it is by utilizing its accuracy or as a tool for drilling or the like since it can be thermally deformed easily, it can be finished to a pellet or to a required shape to be used as a forming file.

### (C) When used as a pellet:

A conventional pellet is such that diamond is mixed without processing in a metal matrix as described above and fixed to a base, and a material to be ground is shaped to a required surface such as a plane, a curved surface, an irregular surface and the like with a required motion such as sliding or rotation.

In the present invention, by replacing a part of the diamond used in the conventional pellet by the non-peelable metal-coated diamond or by further adding the non-peelable metal-coated diamond in the conventional pellet in which raw diamond is mixed, early abrasion of the tool is improved, and finishing accuracy of the workpiece can be improved.

### (D) In the case of the non-peelable metal-coated diamond-containing brazing material:

For example, by applying silver solder or a solder to a base having a required shape such as a wavy shape or a dent and by adjusting a balance, it can be used as a drill or a grinding blade tool used for a dental use, a grinder tool of a Leutor for characters and drawings in ceramic, glass and plastic.

The embodiment of the present invention will be described more specifically below by referring to the drawings.

### [Example 1]

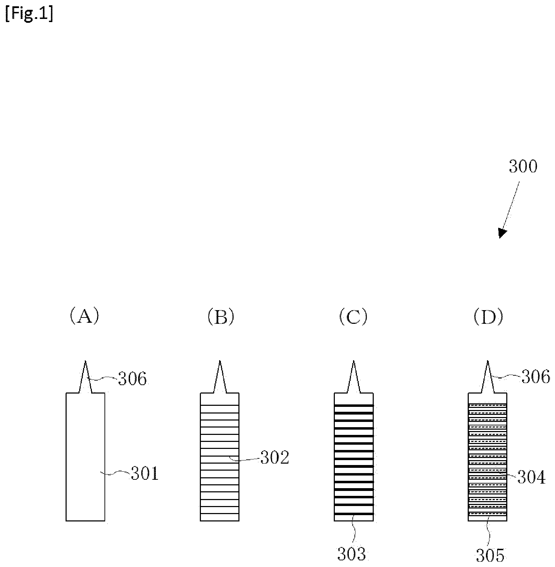

A diamond-joined hand file 300 illustrated in Figure 1 can be manufactured by (A) to (D) processes. In a plate 301 (A) made of metal and having a hand file shape and including an attachment portion 306 to be attached to a grip, grooves 302 each having a circular shape, a square shape, a V-shape, a U-shape or the like are arbitrarily drilled in plural rows (B), a rod-shaped diamond-containing brazing material 303 (hereinafter referred to simply as a diamond-containing brazing material 303) in which the non-peelable metal-coated diamond 304 adjusted to a length of the groove 302 by cutting or the like is contained in a brazing material 305 is placed in the groove 302 (C), and the diamond-containing brazing material 303 is heated/melted so that the non-peelable metal-coated diamond 304 is joined to the groove 302 in the plate 301 made of metal through the brazing material 305 (D). The brazing material 305 is soldered to the metal non-peelably coated on the non-peelable metal-coated diamond 304 and the plate 301 made of metal. As a result, the diamond is fixed to the hand file.

### [Example 2]

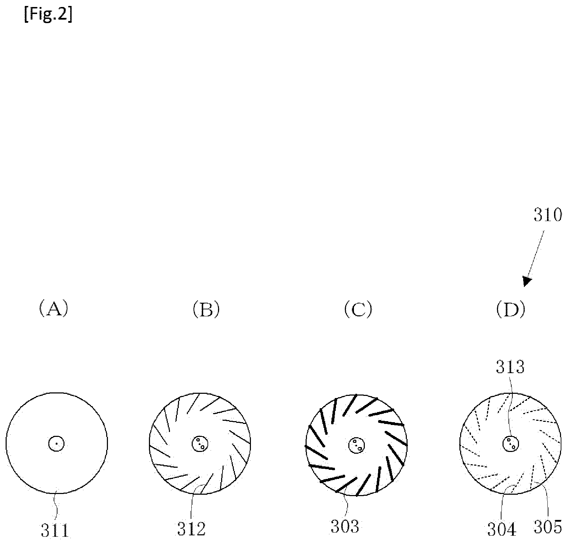

A diamond-joined round grinding disk 310 illustrated in Figure 2 can be manufactured by (A) to (D) processes. In a disk 311 (A) made of metal and having a connection portion 313 to be connected to a rotating shaft, a groove 312 having a circular shape, a square shape, a V-shape, a U-shape or the like is arbitrarily drilled radially (B), the diamond-containing brazing material 303 adjusted to a length of the groove 312 by cutting or the like is placed in the groove 312 (C), and the diamond-containing brazing material 303 is heated/melted so that the non-peelable metal-coated diamond 304 is joined to the groove 312 in the disk 311 made of metal through the brazing material 305 (D). The brazing material 305 is soldered to the metal non-peelably coated on the non-peelable metal-coated diamond 304 and the disk 311 made of metal. As a result, the diamond is fixed to the grinding disk.

### [Example 3]

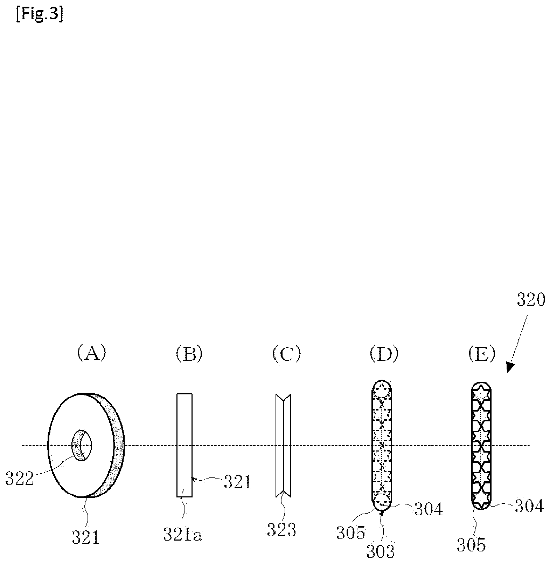

A diamond-joined rotating cutting disk 320 illustrated in Figure 3 can be manufactured by (A) to (E) processes. In an outer peripheral surface 321a of a disk 321 (A) (B) having a hole 322 and made of metal, a groove 323 having a circular shape, a square shape, a V-shape, a U-shape or the like is arbitrarily drilled (C), the diamond-containing brazing material 303 adjusted to a length of the groove 323 by cutting or the like is wound around the groove 323 (D), and the diamond-containing brazing material 303 is heated/melted so that the non-peelable metal-coated diamond 304 is joined to the groove 323 in the disk 321 made of metal through the brazing material 305 (E). The brazing material 305 is soldered to the metal non-peelably coated on the non-peelable metal-coated diamond 304 and the disk 321 made of metal. As a result, the diamond is fixed to the rotating cutting disk.

### [Example 4]

Subsequently, a method of fixing the non-peelable metal-coated diamond 304 in a screw groove of a metal drill sold in the market will be described. By winding the diamond-containing brazing material 303 in the screw groove of the metal drill and by heating/melting the diamond-containing brazing material 303, the non-peelable metal-coated diamond 304 is joined to the screw groove of the metal drill through the brazing material 305. The brazing material 305 is soldered to the metal non-peelably coated on the non-peelable metal-coated diamond 304 and the metal screw. As a result, the diamond is fixed to the metal drill. To the screw groove, the non-peelable metal-coated diamond 304 may be soldered with the diamond-containing brazing material 303 after adjustment to a desired depth.

### [Example 5]

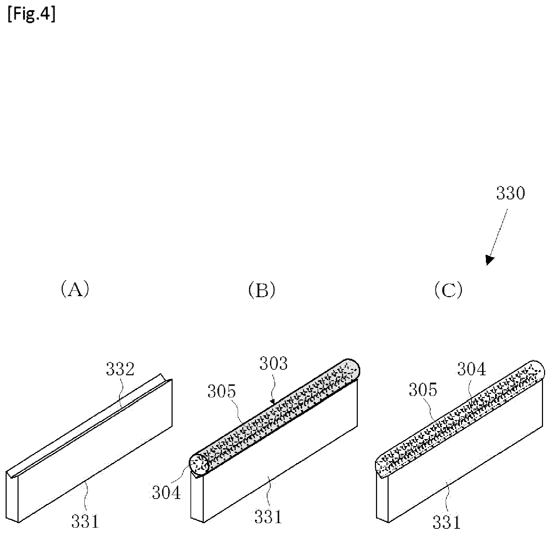

A diamond-joined blade 330 illustrated in Figure 4 can be manufactured by (A) to (C) processes. In a side surface of a metal plate such as a steel plate, a groove 332 is drilled so as to have a base metal 331 (A). The groove 332 may have a section with a circular shape, a square shape, a V-shape, a U-shape or the like. Then, the diamond-containing brazing material 303 adjusted to a length of the groove 332 by cutting or the like is placed in the groove 332 (B), and the diamond-containing brazing material 303 is heated/melted so that the non-peelable metal-coated diamond 304 is joined to the groove 332 in the base metal 331 through the brazing material 305 (C). The brazing material 305 is soldered to the metal non-peelably coated on the non-peelable metal-coated diamond 304 and the base metal 331 made of metal. As a result, the diamond is fixed to the blade.

### [Example 6]

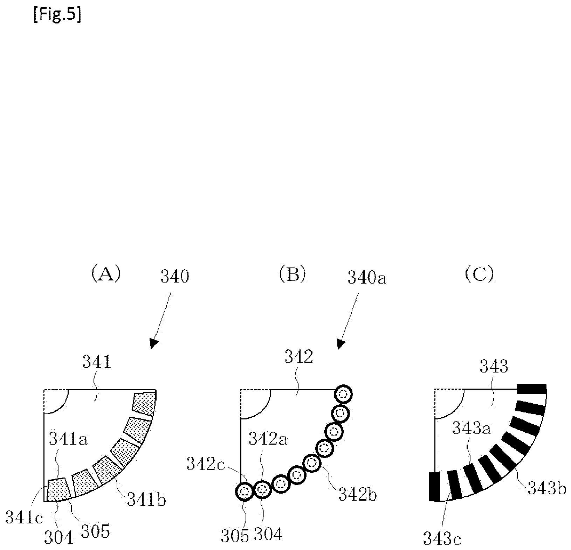

Each of diamond-joined disk-shaped blades 340(A), 340a(B), 340b(C) illustrated in Figure 5 has a trapezoidal groove 341a, a spherical groove 342a or a square groove 343a drilled in a circumferential surface of each of base metals 341, 342, 343 made of metal, a chip shape matching a shape of each of them, that is, one of a trapezoidal diamond-containing brazing material 341b, a spherical diamond-containing brazing material 342b, a square diamond-containing brazing material 343b is inserted, and by heating/melting the diamond-containing brazing material 341b, 342b or 343b, the non-peelable metal-coated diamond 304 is joined to the groove 341a, 342a or 343a of the base metal 341, 342 or 343 through the brazing material 305. The brazing material 305 is soldered to the metal non-peelably coated on the non-peelable metal-coated diamond 304 and further the brazing material 305 is soldered to the base metal 341, 342 or 343 made of metal by a soldering portion 341c, 342c and 343c. As a result, the diamond is fixed to the disk-shaped blade. In this case, workability is good when a chip thicker than the blade is used.

### [Example 7]

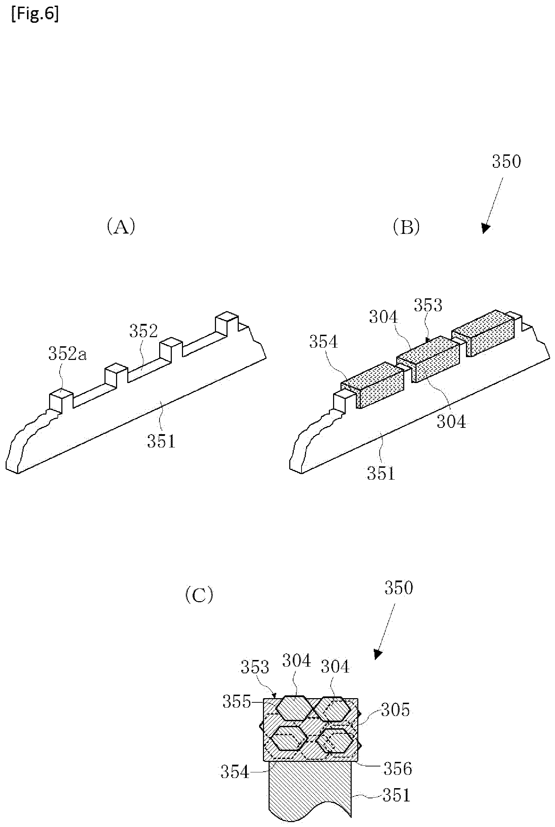

A diamond-joined plate-shaped blade 350 illustrated in Figure 6 can be manufactured by (A) to (B) processes. (C) is a sectional schematic view of an enlarged portion of a diamond-containing brazing material 353 and a base metal 351 after soldering. In a groove 352 drilled between a projection 352a and a projection 352a of the base metal 351 (A) made of metal, the diamond-containing brazing material 353 having a chip shape matching a shape of the groove 352 is fitted, and by heating/melting the diamond-containing brazing material 353, the non-peelable metal-coated diamond 304 is joined to the groove 352 of the base metal 351 made of metal through the brazing material 305 (B). The brazing material 305 is soldered to the metal non-peelably coated on the non-peelable metal-coated diamond 304 by a soldering portion 355 and is soldered also to the base metal 351 made of metal by a soldering portion 354. As a result, the diamond is fixed to the plate-shaped blade.

If the diamond-containing brazing material 353 has the same thickness as that of the base metal 351, a side surface of the diamond-containing brazing material 353 cannot be used for polishing/grinding and moreover, if the side surface of the base metal 351 comes into contact with a work, a work is damaged. In order to improve/prevent it, the chip-shaped diamond-containing brazing material 353 thicker than the base metal 351 may be fixed so as to form an overhang 356. Moreover, when a lower end portion of the diamond-containing brazing material 353 is soldered by covering a part of the side surface of the base metal 351, abrasion is reduced, and fixing strength of the diamond-containing brazing material 353 is improved. If a cutting width by the diamond-containing brazing material 353 is to be narrowed, it is only necessary that the diamond-containing brazing material 353 having the same thickness as that of the base metal 351 is fixed to the base metal 351.

### [Example 8]

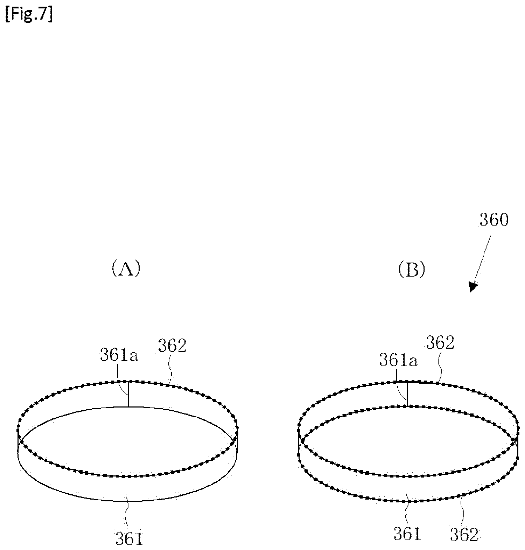

A diamond-joined band-shaped blade 360 (A), (B) illustrated in Figure 7 is formed by soldering a chip-shaped diamond-containing brazing material 362 to one side surface of a cylindrical band-shaped base metal 361 made of metal in which metal plates such as springs are connected by a seam portion 361a (A) or by soldering a chip-shaped diamond-containing brazing material 362 to two side surfaces (B). At that time, on a side surface of the band-shaped base metal 361, a chip is disposed in a spot cut out having a chip shape, and by heating/melting the diamond-containing brazing material 353, the non-peelable metal-coated diamond 304 is joined to the side-surface spot of the band-shaped base metal 361 made of metal through the brazing material 305. The brazing material 305 is soldered to the metal non-peelably coated on the non-peelable metal-coated diamond 304 and the band-shaped base metal 361 made of metal. As a result, the diamond is fixed to the band-shaped blade.

### [Example 9]

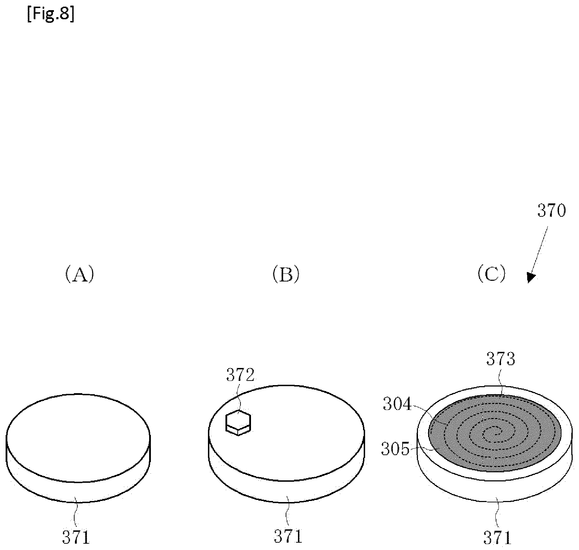

A chip-shaped diamond-containing brazing material 372 and its use example are illustrated in Figure 8. A diamond-containing brazing material 372 is a brazing material formed into a so-called drop shape by having the non-peelable metal-coated diamond 304 contained in the brazing material 305 containing solder. It is capable of easy polishing/grinding of a portion difficult to be worked by free deformation according to convenience of the user. Other abrasive grains and inclusions can be mixed as necessary.

If a surface to be worked is large, grinding chips from a surface machined by the abrasive grains interfere with the subsequent grinding work and lower working efficiency and thus, it is desirable that abrasive grains other than the non-peelable metal-coated diamond 304 are contained in the diamond-containing brazing material 372. The abrasive grains other than the non-peelable metal-coated diamond 304 are easily removed during the grinding work, the grinding chips enter a hole (chip pocket) formed by the removal and maintain the grinding effect, whereby the wide surface to be worked can be efficiently ground.

A diamond-joined polishing disk 370 illustrated in Figure 8 can be manufactured by (A) to (C) processes. On a circular base metal 371 (A) made of metal, a diamond-containing brazing material 372 is placed (B), and the diamond-containing brazing material 372 is heated/melted and then, the diamond-containing brazing material 372 is spread thinly on a surface of the circular base metal 371 by a spatula or the like so as to form a diamond-containing coating 373 (C). As a result, the non-peelable metal-coated diamond 304 is joined to a surface of the circular base metal 371 made of metal through the brazing material 305 (C). The brazing material 305 is soldered to the metal non-peelably coated on the non-peelable metal-coated diamond 304 and the circular base metal 371 made of metal. As a result, the diamond is fixed to the polishing disk. By applying the metal brazing material 305 such as a solder on a diffusion surface of the diamond-containing brazing material 372 of the circular base metal 371 in advance, a spreading work of the diamond-containing brazing material 372 is easy. If the abrasive grains other than the non-peelable metal-coated diamond 304 are mixed in the brazing material 305, grinding chips are taken in, and polishing workability is not lowered.

### [Example 10]

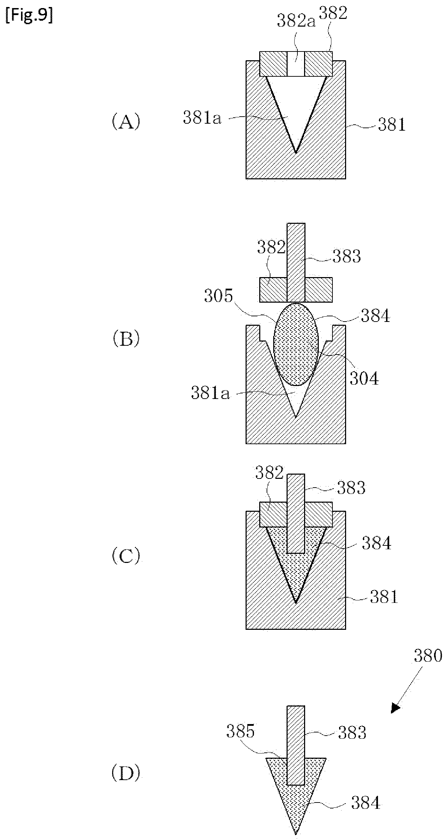

A diamond-joined tool tip end 380 illustrated in Figure 9 can be manufactured by (A) to (D) processes. A carbon mold 381 (A) in which a groove 381a with a desired shape is drilled and to which the brazing material 305 is not soldered and a carbon presser 382 covering the groove 381a are prepared (A). A hole 382a is drilled in the carbon presser 382, and a rod 383 made of metal is inserted therein.

Subsequently, a drop-shaped diamond-containing brazing material 384 is input (B) in the groove 381a, and the diamond-containing brazing material 384 is heated/melted, while the diamond-containing brazing material 384 is pressed by the carbon presser 382 in the hole 382a of which the rod 383 is inserted, the rod 383 is fitted in the diamond-containing brazing material 384 (C). After cooling, the diamond-containing brazing material 384 is formed into a shape of the groove 381a and is soldered to a tip end of the rod 383 made of metal (D). On the other hand, the brazing material 305 is not soldered to the carbon mold 381 or the carbon presser 382.

The non-peelable metal-coated diamond 304 is joined to the rod 383 made of metal through the brazing material 305. The brazing material 305 is soldered (soldering portion 385) to the metal non-peelably coated on the non-peelable metal-coated diamond 304 and the rod 383 made of metal. As a result, the diamond-containing brazing material 384 containing diamond is fixed to the metal rod-shaped tip end and becomes a tip end of a machining tool such as a Leutor.

### [Example 11]

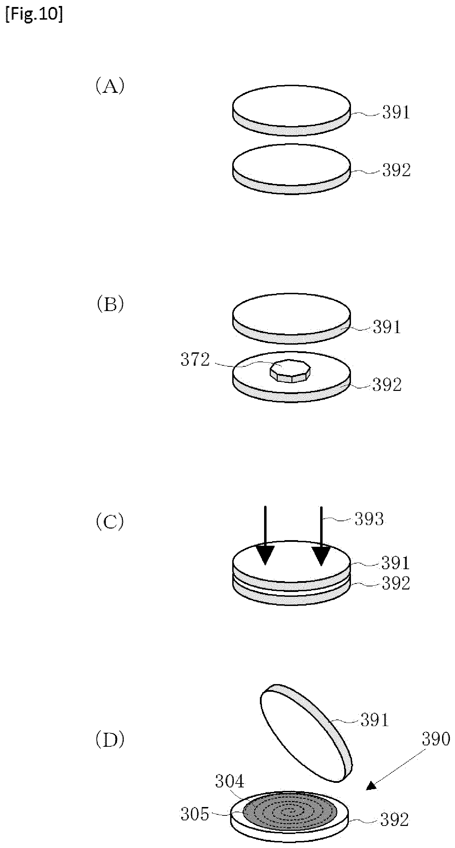

A diamond-joined sheet 390 illustrated in Figure 10 can be manufactured by (A) to (D) processes. A chip-shaped diamond-containing brazing material 372 is placed (B) between two upper and lower carbon disks 391 and 392 (A) and heated/melted, and the diamond-containing brazing material 372 is pressurized 393. After cooling, the sheet-shaped diamond-joined sheet 390 containing the non-peelable metal-coated diamond 304 is formed without being bonded to the upper and lower carbon disks 391 and 392.

After that, the sheet-shaped diamond-joined sheet 390 is cut to arbitrary shape and size and adhered to a desirable plate or rod by using a double-sided adhesive tape and used for grinding of a workpiece. As a result, a tool to which the diamond abrasive grains are joined can be easily manufactured.

### [Reference Signs List]

- 300: diamond-joined hand file
- 301: plate
- 302: groove
- 303: diamond-containing brazing material
- 304: non-peelable metal-coated diamond
- 305: brazing material
- 306: attachment portion
- 310: diamond-joined round grinding disk
- 311: disk
- 312: groove
- 313: connection portion
- 320: diamond-joined rotating cutting disk
- 321: disk
- 321a: outer peripheral surface
- 322: hole
- 323: groove
- 330: diamond-joined blade
- 331: base metal
- 332: groove
- 340: diamond-joined disk-shaped blade
- 340a: diamond-joined disk-shaped blade
- 340b: diamond-joined disk-shaped blade
- 341: base metal
- 341a: groove
- 341b: diamond-containing brazing material
- 341c: soldering portion
- 342: base metal
- 342a: groove
- 342b: diamond-containing brazing material
- 342c: soldering portion
- 343: base metal
- 343a: groove
- 343b: diamond-containing brazing material
- 343c: soldering portion
- 350: diamond-joined plate-shaped blade
- 351: base metal
- 352: groove
- 352a: projection
- 353: diamond-containing brazing material
- 354: soldering portion
- 355: soldering portion
- 356: overhang
- 360: diamond-joined band-shaped blade
- 361: band-shaped base metal
- 361a: seam portion
- 362: diamond-containing brazing material
- 370: diamond-joined polishing disk
- 371: circular base metal
- 372: diamond-containing brazing material
- 373: diamond-containing coating
- 380: diamond-joined tool tip end
- 381: carbon mold
- 381a: groove
- 382: presser
- 382a: hole
- 383: rod
- 384: diamond-containing brazing material
- 385: soldering portion
- 390: diamond-joined sheet
- 391: upper carbon disk
- 392: lower carbon disk
- 393: pressurization

## Claims

1. A diamond-containing brazing material **characterized in that**
non-peelable metal-coated diamond in which metal is coated on a diamond surface non-peelably is mixed in a brazing material.

2. The diamond-containing brazing material according to claim 1, **characterized in that**
the diamond-containing brazing material is shaped to a drop shape or a rod shape.

3. The diamond-containing brazing material according to claim 1, **characterized in that**
the brazing material is a solder.

4. The diamond-containing brazing material according to claim 1, **characterized in that**
hard metal or abrasive grains indicating heat resistance against melting heat of the brazing material are mixed in the brazing material in order to improve dispersion performances of the non-peelable metal-coated diamond.

5. A diamond-joined tool **characterized in that** a brazing material of the diamond-containing brazing material according to claim 1 is melted and metallically bonded on a tool surface.

6. A diamond-joined tool **characterized in that**
the diamond-containing brazing material according to claim 3 is deformed into a tool shape, and the brazing material is melted and metallically bonded to a tool surface.

7. A diamond-joined sheet **characterized in that**
the diamond-containing brazing material according to claim 1 is melted and pressurized on a carbon disk into a sheet shape.
